# EUROPEAN PATENT APPLICATION

(11) **EP 4 693 197 A1**
(43) Date of publication of application: **11.02.2026**
(21) Application number: 24869775.7
(22) Date of filing: 27.05.2024
(51) Int. Cl.: G06T 11/00

(54) **IMAGE RENDERING METHOD BASED ON VARIABLE RATES SHADING, AND ELECTRONIC DEVICE**

(30) Priority: 25.09.2023 CN 202311256677
(71) Applicant: Huawei Technologies Co., Ltd., Shenzhen, Guangdong 518129 (CN)
(72) Inventor: GUO, Chaoxiang, Shenzhen, Guangdong 518129 (CN); ZHENG, Tianji, Shenzhen, Guangdong 518129 (CN); WANG, Shu, Shenzhen, Guangdong 518129 (CN); CHEN, Minghui, Shenzhen, Guangdong 518129 (CN)
(74) Representative: Pfenning, Meinig & Partner mbB
(86) International application number: PCT/CN2024/095484
(87) International publication number: WO 2025/066210

(57) **Abstract**

An image rendering method based on variable rate shading and an electronic device are provided. The method includes: determining an occlusion region and a non-occlusion region in a to-be-displayed image of a first application (S310), where the occlusion region is an occluded region in the to-be-displayed image, and the non-occlusion region is a region that is not occluded in the to-be-displayed image; and rendering the to-be-displayed image based on variable rate shading, to generate a display image of the first application, where the occlusion region is rendered based on at least a first shading rate, the non-occlusion region is rendered based on at least a second shading rate, and the first shading rate is less than the second shading rate (S320). According to the method in embodiments of this application, the occlusion region of the application is identified and variable rate shading is performed, to reduce computing amounts for rendering without deteriorating user experience. This improves rendering performance and reduces display power consumption.

## Description

This application claims priority to Chinese Patent Application No. 2023112566777, filed with the China National Intellectual Property Administration on September 25, 2023 and entitled "IMAGE RENDERING METHOD BASED ON VARIABLE RATE SHADING AND ELECTRONIC DEVICE", which is incorporated herein by reference in its entirety.

### TECHNICAL FIELD

This application relates to the field of computer technologies, and in particular, to an image rendering method based on variable rate shading and an electronic device.

### BACKGROUND

In the field of image display, shading is one of parts that have highest computing costs in a render pass (Render pass). As resolution and a refresh rate of a screen increase, requirements for shading computing are increasing significantly, and cannot be met by most powerful GPUs.

To address this challenge, some graphics processing unit (Graphics Processing Unit, GPU) manufacturers have introduced a more flexible shading mechanism in chipsets of graphics processing units, which is referred to as variable rate shading (Variable Rate Shading, VRS).

VRS may be shading performed on a specified image region at a frequency coarser than a pixel, to allocate rendering performance or computing power based on different image rending rates. In other words, for the specified image region, VRS may be shading performed per group of pixels, and a result is copied to all samples in the group, to reduce computing consumption of shading on the specified region and improve rendering performance.

Although VRS is a flexible shading mechanism that decouples a pixel and a shading frequency and improves rendering performance without deteriorating perceptible output image quality, VRS still has many disadvantages. In VRS application scenarios, to ensure that the perceptible output image quality does not deteriorate and to improve performance, regions that can be shaded at a low rate need to be identified and maximized. In this way, optimal VRS application effect can be achieved. However, in the existing VRS solution, a region identification manner is simple and limited, which leads to limited performance improvement.

Therefore, a new VRS method is required to improve rendering performance.

### SUMMARY

This application provides an image rendering method based on variable rate shading and an electronic device, and further provides a computer-readable storage medium, to improve rendering performance.

The following technical solutions are used in embodiments of this application.

According to a first aspect, this application provides an image rendering method based on variable rate shading, and the method is applied to an electronic device. The method includes: determining an occlusion region and a non-occlusion region in a to-be-displayed image of a first application, where the occlusion region is an occluded region in the to-be-displayed image, and the non-occlusion region is a region that is not occluded in the to-be-displayed image; and rendering the to-be-displayed image based on variable rate shading, to generate a display image of the first application, where the occlusion region is rendered based on at least a first shading rate, the non-occlusion region is rendered based on at least a second shading rate, and the first shading rate is less than the second shading rate.

According to the method in embodiments of this application, the occlusion region of the application is identified and variable rate shading is performed, to reduce computing amounts for rendering without deteriorating user experience. This improves rendering performance and reduces display power consumption. According to the method in embodiments of this application, compared with an image motion region, the occlusion region has a larger effective range and is less likely to be perceived by a user. Therefore, variable rate shading has a stable gain, and covers more scenarios.

In an implementation of the first aspect, the occlusion region includes any one or any combination of a hand occlusion region, a user interface occlusion region, another application occlusion region, and a device component self-occlusion region. The hand occlusion region includes a hand coverage region or a part of the hand coverage region on a display covered by the hand of the user when the user performs a touch operation. The user interface occlusion region includes a region, in an image region of a user interface of the first application, that occludes application display content of the first application. The another application occlusion region includes a window region of a foreground active window of a second application, or a part of the window region of the foreground active window of the second application. The device component self-occlusion region includes a region that corresponds to a front-facing camera and that is of the display of the electronic device.

According to the method in embodiments of this application, the occlusion region is determined from a plurality of perspectives, to widen an effective range of the occlusion region, improve stability of a gain of variable rate shading, and cover more scenarios.

In an implementation of the first aspect, determining the occlusion region and the non-occlusion region in the to-be-displayed image of the first application includes: in response to a touch event of the user, parsing the touch event, to obtain touch region information; determining the hand coverage region based on the touch region information; and marking the hand coverage region as the hand occlusion region, or marking, as the hand occlusion region, a region that is in the hand coverage region and that overlaps a display interface of the first application.

In an implementation of the first aspect, determining the occlusion region and the non-occlusion region in the to-be-displayed image of the first application includes: determining the image region of the user interface based on a display image of a previous frame; and when the image region of the user interface occludes the application content of the first application, marking an image region that causes occlusion in the image region of the user interface as the user interface occlusion region. In an implementation of the first aspect, determining the occlusion region and the non-occlusion region in the to-be-displayed image of the first application includes: identifying a user interface render pass of a previous frame; performing sampling on the user interface render pass, to obtain a sampling pixel; and when the sampling pixel has a color value and transparency is greater than a preset threshold, marking an image region corresponding to the sampling pixel as the user interface occlusion region.

In an implementation of the first aspect, determining the occlusion region and the non-occlusion region in the to-be-displayed image of the first application includes: obtaining window information of the foreground active window of the second application; drawing the window region of the foreground active window based on the window information of the foreground active window of the second application; and marking the window region of the foreground active window as the another application occlusion region, or marking, as the another application occlusion region, a region that is in the window region of the foreground active window and that overlaps a display interface of the first application.

In an implementation of the first aspect, determining the occlusion region and the non-occlusion region in the to-be-displayed image of the first application includes: comparing a shape of a normal display region of the display with a rectangular display picture, and drawing an abnormal display region of the display based on a comparison result; and marking the abnormal display region as the device component self-occlusion region, or marking, as the device component self-occlusion region, a region that is in the abnormal display region and that overlaps a display interface of the first application.

In an implementation of the first aspect, the occlusion region includes at least a first region. Rendering the to-be-displayed image based on variable rate shading, to generate the display image of the first application includes: selecting a first pixel region from the first region based on the first shading rate, where the first region includes the first pixel region and a second pixel region; and shading pixels in the first pixel region, and performing shading result filling on the second pixel region based on a shading result of the first pixel region.

In an implementation of the first aspect, the occlusion region further includes at least a second region. Rendering the to-be-displayed image based on variable rate shading, to generate the display image of the first application further includes: shading the second region at a third shading rate, where the third shading rate is different from the first shading rate, and the third shading rate is less than the second shading rate.

In an implementation of the first aspect, the second region and the first region respectively correspond to different occlusion region types.

In an implementation of the first aspect, the method includes: determining an occlusion region and a non-occlusion region in an (N-1)^{th} frame of display image of the first application; obtaining a rendering instruction stream and association data of an N^{th} frame of to-be-displayed image of the first application; performing display image rendering based on the rendering instruction stream and the association data of the N^{th} frame of to-be-displayed image of the first application, to generate an N^{th} frame of display image of the first application, where the variable rate shading is applied based on the occlusion region and the non-occlusion region in the (N-1)^{th} frame of to-be-displayed image of the first application; and determining an occlusion region and a non-occlusion region in the N^{th} frame of display image of the first application.

According to a second aspect, this application provides an electronic device. The electronic device includes a memory configured to store computer program instructions and a processor configured to execute the computer program instructions, and when the computer program instructions are executed by the processor, the electronic device is triggered to perform steps of the method in the first aspect.

According to a third aspect, this application provides a computer-readable storage medium. The computer-readable storage medium stores a computer program, and when the computer program is run on a computer, the computer is enabled to perform the method in the first aspect.

### BRIEF DESCRIPTION OF DRAWINGS

FIG. 1 is a flowchart of performing VRS according to an embodiment of this application;
FIG. 2 is a flowchart of performing VRS according to an embodiment of this application;
FIG. 3 is a flowchart of performing VRS according to an embodiment of this application;
FIG. 4 is a diagram of display effect of a screen of a mobile phone according to an embodiment of this application;
FIG. 5 is a guide mask diagram according to an embodiment of this application;
FIG. 6 is a flowchart of drawing a guide mask diagram according to an embodiment of this application;
FIG. 7 is a diagram of a finger touch position of a user in a game state;
FIG. 8 is a guide mask diagram according to an embodiment of this application;
FIG. 9 is a flowchart of drawing a guide mask diagram according to an embodiment of this application;
FIG. 10 is a guide mask diagram according to an embodiment of this application;
FIG. 11 is a flowchart of drawing a guide mask diagram according to an embodiment of this application;
FIG. 12 is a guide mask diagram according to an embodiment of this application;
FIG. 13 is a flowchart of drawing a guide mask diagram according to an embodiment of this application;
FIG. 14 is a guide mask diagram according to an embodiment of this application;
FIG. 15 is a diagram of a display of a mobile phone according to an embodiment of this application;
FIG. 16 is a guide mask diagram according to an embodiment of this application;
FIG. 17 is a diagram of values of 8*8 data bits in a pixel shading list at a shading rate of 4*4;
FIG. 18 is a diagram of a shading result of 8*8 pixels at a shading rate of 4*4;
FIG. 19 is a diagram of a result of shading supplement performed based on the shading result in FIG. 18;
FIG. 20 is a flowchart of implementing VRS according to an embodiment of this application;
FIG. 21 is a diagram of a system architecture according to an embodiment of this application;
FIG. 22 is a schematic flowchart of running a data obtaining module 2231 according to an embodiment of this application;
FIG. 23 is a schematic flowchart of running a variable rate shading module 2238 according to an embodiment of this application; and
FIG. 24 is a diagram of a structure of an electronic device according to an embodiment of this application.

### DESCRIPTION OF EMBODIMENTS

To make objectives, technical solutions, and advantages of this application clearer, the following clearly and completely describes the technical solutions in this application with reference to specific embodiments and accompanying drawings in this application. It is clear that the described embodiments are merely a part of but not all of embodiments of this application. All other embodiments obtained by a person of ordinary skill in the art based on embodiments of this application without creative efforts shall fall within the protection scope of this application.

Terms used in implementations of this application are only used to explain specific embodiments of this application, but are not intended to limit this application.

In an application scenario of VRS, rendering performance can be improved without deteriorating perceptible output image quality. A key lies in that a region that can be shaded at a low rate may be identified in VRS.

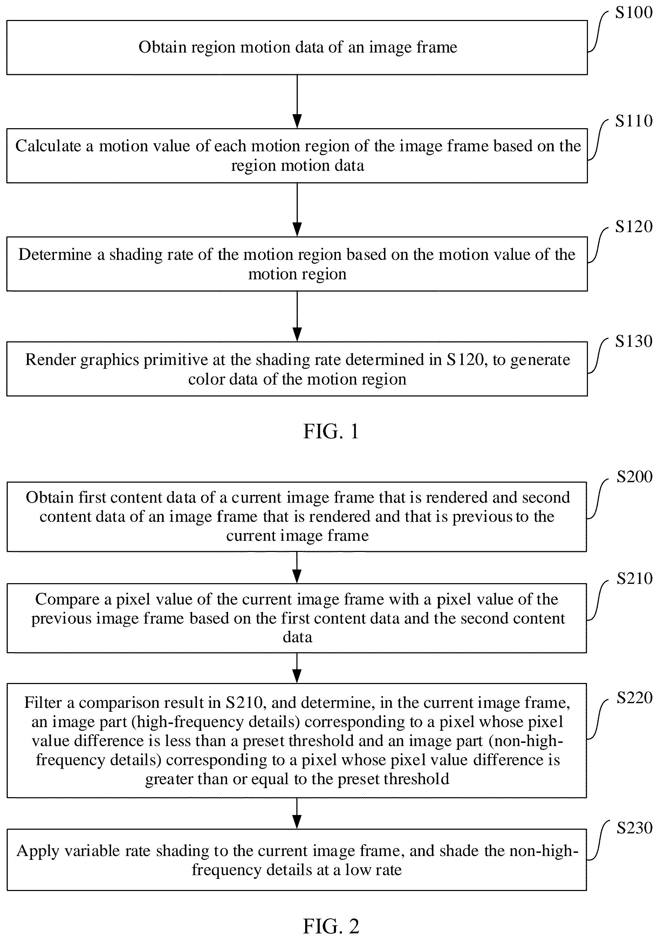

FIG. 1 is a flowchart of performing VRS according to an embodiment of this application.

In an embodiment, a GPU performs the following procedure as shown in FIG. 1 to implement VRS.

S100: Obtain region motion data of an image frame.

In a dynamic image display scene, a moving object exists in a dynamic image picture, and an image region of the moving object in the picture is a motion region of the image frame.

For example, in a video in which an object falls, when a shooting position and a field of view remain unchanged (the background in the video remains unchanged), in the video, the object falls from the top of the picture to the bottom. Between different image frames of the video, a position of the falling object in an image frame continuously changes, and a motion region in the dynamic image is an image region corresponding to the falling object. For example, in a first image frame, an image region of the falling object is a first region. In a second image frame (the first image frame is previous to the second image frame), an image region of the falling object is a second region. Compared with a motion region of the first image frame, a motion region of the second image frame is a union set of the first region and the second region.

The region motion data is data used to describe the motion region in the dynamic image. For example, in an embodiment, the region motion data of the image frame may be a position of the motion region, position change amplitude of the moving object in the motion region, and a position change speed of the moving object in the motion region.

S110: Calculate a motion value of each motion region of the image frame based on the region motion data.

In some examples, the motion value is used to quantize a motion status of the moving object in the motion region. Usually, a higher moving speed of the moving object indicates a larger motion value.

For example, in the video in which the object falls, a higher speed at which the object falls corresponds to a larger motion value.

S120: Determine a shading rate of the motion region based on the motion value of the motion region.

In the dynamic image display scene, even if display effect (for example, display resolution) of image frames is consistent, in comparison with a non-moving object in the image, an image of the moving object is blurry in visual effect of human eyes. Therefore, actively reducing image display effect of the moving object does not affect visual effect perceived by eyes of a user.

In some embodiments, a small shading rate may be used (fineness of the displayed image is actively reduced) for a motion region, in the image frame, in which a motion speed exceeds a dynamic vision resolution capability of the human eyes (a motion value exceeds a preset threshold), and a large shading rate may be used for a non-motion region, in the image frame, in which a motion speed does not exceed the dynamic vision resolution capability of the human eyes.

A higher speed of a moving object indicates that the object appears blurrier to the human eyes. Therefore, a small shading rate may be used for a motion region in which a motion speed is high (a motion value is large), and a large shading rate may be used for a motion region in which a motion speed is low (a motion value is small).

S130: Render graphics primitive at the shading rate determined in S120, to generate color data of the motion region.

Based on the procedure shown in FIG. 1, a variable rate shading function can be effectively implemented, and rendering performance is improved and power consumption is reduced to some extent. However, there is a limitation in determining the shading rate based on only the motion value, and when the object is in a low speed or a static state, a gain of the VRS solution is reduced.

FIG. 2 is a flowchart of performing VRS according to an embodiment of this application.

In an embodiment, a GPU performs the following procedure as shown in FIG. 2 to implement VRS.

S200: Obtain first content data of a current image frame that is rendered and second content data of an image frame that is rendered and that is previous to the current image frame.

S210: Compare a pixel value of the current image frame with a pixel value of the previous image frame based on the first content data and the second content data.

S220: Filter a comparison result in S210, and determine, in the current image frame, an image part (high-frequency details) corresponding to a pixel whose pixel value difference is less than a preset threshold and an image part (non-high-frequency details) corresponding to a pixel whose pixel value difference is greater than or equal to the preset threshold.

Usually, due to the persistence of vision of the human eyes, faster changes in pictures make it more difficult for the human eyes to discern image details. For example, a video shows a change process in which an image A gradually changes to an image B. A faster speed at which the image A changes to the image B makes it more difficult for the human eyes to discern change details of the image A changing to the image B in the pictures.

Therefore, when the picture change speed exceeds the dynamic resolution capability of the human eyes, image fineness of a picture change region is actively reduced, which does not affect visual effect perceived by eyes of the user.

In an application scenario of dynamic image display, for an image region, a smaller image difference between two adjacent image frames indicates a slower image change of the image region, that is, the human eyes can more clearly discern image details of the image region.

Therefore, a preset threshold is set for the dynamic resolution capability of the human eyes. In S220, the image part (the high-frequency details) corresponding to the pixel whose pixel value difference is less than the preset threshold in the current image frame is obtained, and the high-frequency details are parts in which image details can be discerned by the human eyes. Correspondingly, the other non-high-frequency details are parts in which image details cannot be clearly discerned by the human eyes. Therefore, reducing image display effect of the non-high-frequency details does not affect visual effect perceived by eyes of the user.

S230: Apply variable rate shading to the current image frame, and shade the non-high-frequency details at a low rate.

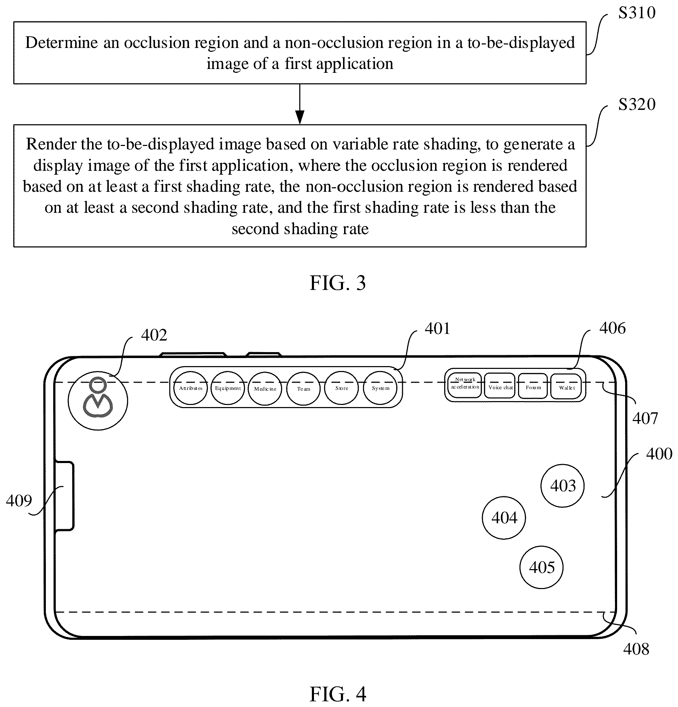

Based on the procedure shown in FIG. 3, a variable rate shading function can be effectively implemented, and rendering performance can be improved and power consumption can be reduced to some extent. However, there is a limitation in determining the shading rate based only on the high-frequency details. When a picture only includes high-frequency details, the foregoing VRS solution may not bring any gain.

An embodiment of this application provides a VRS method, to improve rendering performance without deteriorating perceptible output image quality. In the method in embodiments of this application, before an image of a current application (APP) (a first application) is displayed, a to-be-displayed image needs to be rendered, to generate the display image used for display.

Before the to-be-displayed image is rendered, an occlusion region and a non-occlusion region in the to-be-displayed image of the first application are determined, where the occlusion region is an occluded region in the to-be-displayed image, and the non-occlusion region is a region that is not occluded in the to-be-displayed image.

In a process of rendering the to-be-displayed image, the occlusion region is shaded at a low rate, to improve rendering performance without deteriorating perceptible output image quality.

FIG. 3 is a flowchart of performing VRS according to an embodiment of this application.

In an embodiment, a GPU performs the following procedure as shown in FIG. 3 to implement VRS.

S310: Determine the occlusion region and the non-occlusion region in the to-be-displayed image of the first application.

In some examples, the first application is an application in which a display image currently needs to be rendered. In other words, the first application is an application that runs in the foreground and is displaying an image. The first application outputs the to-be-displayed image, and an image rendering system renders the to-be-displayed image, that is, generates the display image (a current image frame).

The first application may be displayed in full screen (an application currently running in the foreground is only the first application), or the first application and another application may be displayed in split screens (applications currently running in the foreground are a plurality of applications including the first application).

The occlusion region in the to-be-displayed image of the first application is an occluded region in the to-be-displayed image (a current display interface) of the first application, and the non-occlusion region in the to-be-displayed image of the first application is a region that is not occluded in the to-be-displayed image (the current display interface) of the first application.

In an embodiment, in S310, a guide mask (mask) diagram is drawn, and the occlusion region and the non-occlusion region are described in the guide mask diagram.

In some examples, the guide mask diagram includes one interface pattern, and a shape of the interface pattern is the same as that of the to-be-rendered image of the first application. A size of the interface pattern is the same as a size of the to-be-rendered image, or the interface pattern is obtained by proportionally zooming in or out the to-be-rendered image.

The interface pattern is divided into an occlusion region and a non-occlusion region by different colors. The occlusion region may be one connected region or a set of a plurality of connected regions, and the non-occlusion region may be one connected region or a set of a plurality of connected regions.

FIG. 4 is a diagram of display effect of a screen of a mobile phone according to an embodiment of this application.

As shown in FIG. 4, 400 is the screen of the mobile phone. A 3D game scene of a game application is displayed in full screen on the screen 400, 401 is a game toolkit widget, 402 is a role status widget, 403, 404, and 405 are skill button widgets, and 406 is a game assist widget. The screen 400 is a curved display with a notch, 409 is the notch part, and the curved surface part of the screen is above a dashed line 407 and below a dashed line 408.

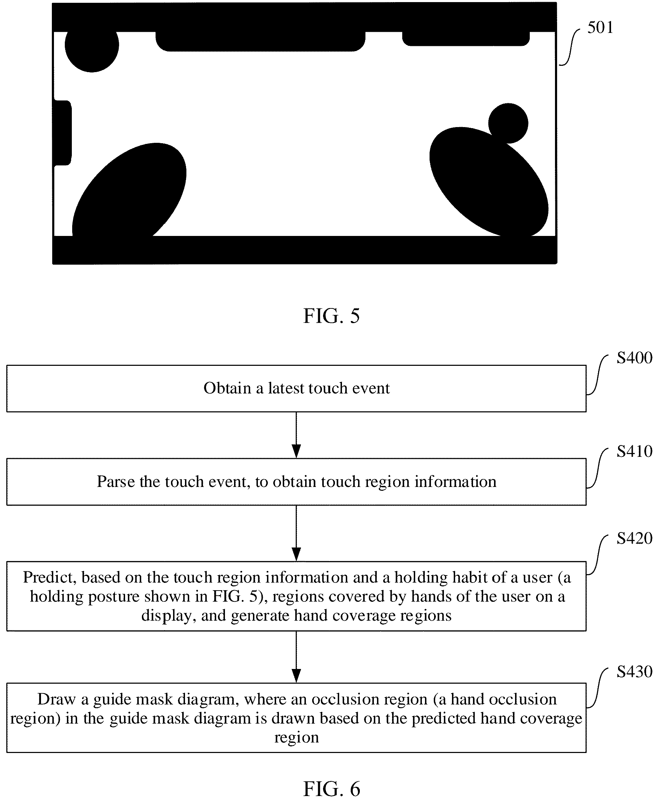

FIG. 5 is a guide mask diagram according to an embodiment of this application.

A guide mask diagram is drawn for a display interface of the screen 400 shown in FIG. 4. The drawn guide mask diagram is shown in 501. The rectangle 501 is an interface pattern whose size and shape are the same as those of a full-screen display interface of the screen 400. Graphic regions in black in the rectangle 501 correspond to occlusion regions on the display interface of the screen 400, and a graphic region in white in the rectangle 501 corresponds to a non-occlusion region on the display interface of the screen 400.

In an embodiment, before S310, a graphics application programming interface (Application Programming Interface, API) call is hooked, a rendering instruction stream and association data are obtained, and the occlusion region and the non-occlusion region in the to-be-displayed image of the first application are determined based on the rendering instruction stream and the association data.

In some examples, the rendering instruction stream includes a rendering instruction that needs to be executed in an image rendering process. The rendering instruction stream may include parameters such as an interface size, a light direction, light intensity, a light color, an optical fiber loss parameter, a to-be-rendered model direction, and a to-be-rendered material direction. The association data includes data that needs to be loaded in the image rendering process. The association data may include to-be-rendered model data, to-be-rendered material data, map data, and the like.

In some embodiments, the occlusion region may be any one or any combination of the following several cases.

### 1. Hand occlusion region

When a user performs a touch operation on an application, a hand (including a finger, a palm, and a wrist) of the user is located between a display and eyes of the user. The hand of the user occludes a view of the user, so that a part of display content of the display is occluded by the hand of the user. During rendering, a region occluded by the hand of the user is shaded at a low rate, which does not deteriorate perceivable output image quality.

Therefore, in an embodiment, the hand occlusion region includes a hand coverage region or a part of the hand coverage region on the display covered by the hand of the user when the user performs the touch operation.

A game application scenario is used as an example. The first application is a game application, and the first application is displayed in full screen.

When the user is playing the game, the user holds the mobile phone with both hands (the mobile phone is horizontally held), and touches the lower left and lower right of the screen of the mobile phone with fingers of both hands.

FIG. 6 is a flowchart of drawing a guide mask diagram according to an embodiment of this application.

S400: Obtain a current touch event.

In some examples, in S400, when a current frame is rendered, a current touch event (Motion Event) is obtained by a system framework (framework) layer at an end of a previous frame or at a start stage of the current frame.

In an implementation of S400, the current touch event is a touch event that is occurring at a current moment; or when no touch event occurs at a current moment, a latest touch event is a touch event occurring at a moment that is closest to the current moment and before the current moment.

In another implementation of S400, a latest touch event is a touch event that occurs in a time period from preset duration (for example, a previous second) before a current moment to the current moment.

S410: Parse the touch event, to obtain touch region information.

In some embodiments, the touch region information includes a quantity of simultaneous touches of the user, coordinates of a center of a touch point, major and minor axes of a touch ellipse region, and a deflection angle of the ellipse.

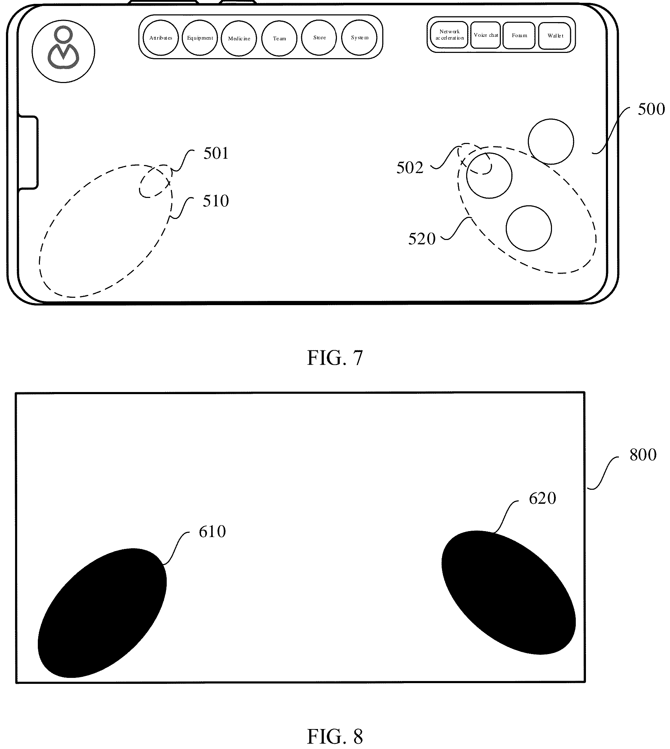

FIG. 7 is a diagram of a finger touch position of a user in a game state.

A screen 500 is a screen of a mobile phone.

In a holding posture in which two hands hold the mobile phone (the mobile phone is horizontally held), touch regions of fingers of the user may be obtained, as shown in 501 and 502 in FIG. 7.

S420 is performed after S410.

S420: Predict, based on the touch region information and a holding habit of the user (the holding posture shown in FIG. 5), regions covered by the hands of the user on the display, and generate hand coverage regions.

For example, based on the embodiment shown in FIG. 7, in some embodiments, S420 includes:
shifting a touch center point (a center point of 501) on a left half screen by 1.5 times a distance of the major axis of the touch region towards the lower left corner of the screen, and shifting a touch center point (a center point of 502) on a right half screen by 1.5 times a distance of the major axis of the touch region towards the lower right corner of the screen.

The major axis and the minor axis are doubled, and the deflection angle of the ellipse remains unchanged, to obtain the predicted hand coverage region.

As shown in FIG. 7, based on positions of 501 and 502 and the holding habit of the user, it may be predicted that the region 510 and the region 520 are the hand coverage regions of the user.

S430: Draw a guide mask diagram, where an occlusion region (a hand occlusion region) in the guide mask diagram is drawn based on the predicted hand coverage region.

In some embodiments, in S430, the occlusion region (the hand occlusion region) of the guide mask diagram is drawn based on ellipse information (lengths of the major axis and the minor axis of the predicted hand occlusion region, and coordinates of the center point of the predicted hand occlusion region) of the predicted hand coverage region.

In an implementation of S430, the predicted hand coverage region is a hand occlusion region.

In another implementation of S430, after the hand coverage region is obtained, it is further determined whether the hand coverage region overlaps a display interface of a first application. If the hand coverage region overlaps the display interface of the first application, a region that is in the hand coverage region and that overlaps the display interface of the first application is marked as the hand occlusion region (a hand occlusion region mask is drawn).

For example, when the first application is displayed in full screen, all hand coverage regions occlude the display interface of the first application, and all the hand coverage regions are marked as hand occlusion regions. When the first application and another application are displayed in split screens, a region that is in the hand coverage region and that overlaps the display interface of the first application may occlude the display interface of the first application, and the region that is in the hand coverage region and that overlaps the display interface of the first application is marked as the hand occlusion region.

FIG. 8 is a guide mask diagram according to an embodiment of this application.

After S430, a guide mask diagram 800 shown in FIG. 8 may be finally drawn. In the guide mask diagram 800 shown in FIG. 8, regions 610 and 620 in black are occlusion regions (hand occlusion regions).

A touch hit region is a region, on a screen, on which a user frequently performs a touch operation. For example, a screen region that is touched by a finger of the user for time of 70% or more per unit time is a touch hit region. In some embodiments, a region that is of a hand of the user and that covers the display when the user performs a touch operation in the touch hit region is predicted based on the touch hit region and the hand holding posture of the user, to generate the hand coverage region.

### 2. User interface (User interface, UI) occlusion region

A user interface is related software designed for interaction and communication between the user and hardware, so that the user can operate the hardware conveniently and effectively to achieve bidirectional interaction and complete a job by using the hardware. The user interface has a wide definition, including a human-computer interaction interface or a graphical user interface. The user interface exists in all fields that are related to information communication between a user and a machine.

When an application is running, a UI of the application is provided to facilitate user control. The UI of the application is covered by application content, and application content occluded by the UI is invisible. During rendering, a region occluded by the UI is shaded at a low rate, which does not deteriorate perceivable output image quality.

For example, when a video application plays a video, if a UI (a video play control button) is hidden, the video image is in full display on the display. If the UI is displayed when the video is played, a UI display solution is that the UI is displayed in a floating manner above the video image, and a part of the video image is occluded.

For another example, when a game application is running, rendering and drawing of pictures of the game application are usually divided into main game scene drawing and game UI drawing. Main game scenes include terrain, vegetation, buildings, characters, special effect, and the like in the game, and the game UI includes operation buttons, role status bar, game system bar, and the like. The game UI is displayed above the main game scene in a floating manner, and occludes a part of the main game scene.

Therefore, in an embodiment, the user interface (UI) occlusion region includes a region, in an image region of a user interface, that occludes application display content.

In some embodiments, in S310, the image region of the user interface is identified from a previous frame of display image picture; it is determined whether the image region on the user interface occludes the application content; and if occlusion is caused, an image region corresponding to a user interface that is occluded is determined as a UI occlusion region.

In an image rendering stage, based on different rendering manners and rendering data types, to-be-rendered data is usually divided into a plurality of parts for rendering. A rendering process of each part is referred to as a render pass (pass). Finally, rendering results of all render passes are combined into a final rendered image result. For example, the to-be-displayed image is divided into a plurality of layers, a rendering process (render pass) is created for each layer, and finally rendering results of the plurality of render passes are superimposed and displayed.

For example, in an application scenario of a game application, display content on a game interface includes a 3D background image, a 3D object image, a 2D game character image, action moves effect, role dialogue, an object name, and a game operation interface. A display sequence of the display content is as follows: displaying the 3D background image; superimposing the 3D object image and the 2D game character image on the 3D background image; marking the object name on the 3D object image; adding the role dialogue and the action moves effect to the 2D game character image; and displaying the game operation interface on the top of all layers. In an image rendering process, a 3D background render pass is created, and a background layer (the background layer includes the 3D background image) is generated through rendering over the 3D background render pass. A 3D object render pass is created, and an object layer (the object layer includes the 3D object image marked with the object name) is generated over the 3D background render pass. A 2D render pass is created, and a 2D layer (the 2D layer includes the 2D game character image to which the role dialog and the action moves effect are added) is generated over the 2D background render pass. A UI render pass is created, and a game operation interface is generated over the UI render pass. Then, the background layer, the object layer, the 2D layer, and the game operation interface are superimposed in sequence and displayed.

In an implementation of S310, in a render pass for identifying a previous image frame, there is a render pass including UI rendering. The render pass including UI rendering may be a render pass that includes only UI rendering (an independent render pass for UI rendering in a rendering process), or may be a render pass including UI rendering and other content rendering (a render pass for UI rendering and other content rendering in a rendering process).

The UI rendering part in the render pass including UI rendering is split to an independent render pass, to obtain a UI render pass that is used only for UI drawing. An opaquely displayed UI interface is determined based on the UI render pass, and a user interface occlusion region is generated.

For example, a pixel of the UI interface is sampled based on the UI render pass. If a color of the pixel is not an initial color (the pixel is not in the initial color means that the pixel has a color), and a transparency (alpha value) of the pixel is greater than a preset blend (blend) threshold (for example, 0.2), it indicates that the pixel is opaquely displayed, and the pixel is marked as a UI occlusion pixel. All pixels of the UI render pass are traversed, and a UI occlusion region is finally determined based on a set of UI occlusion pixels.

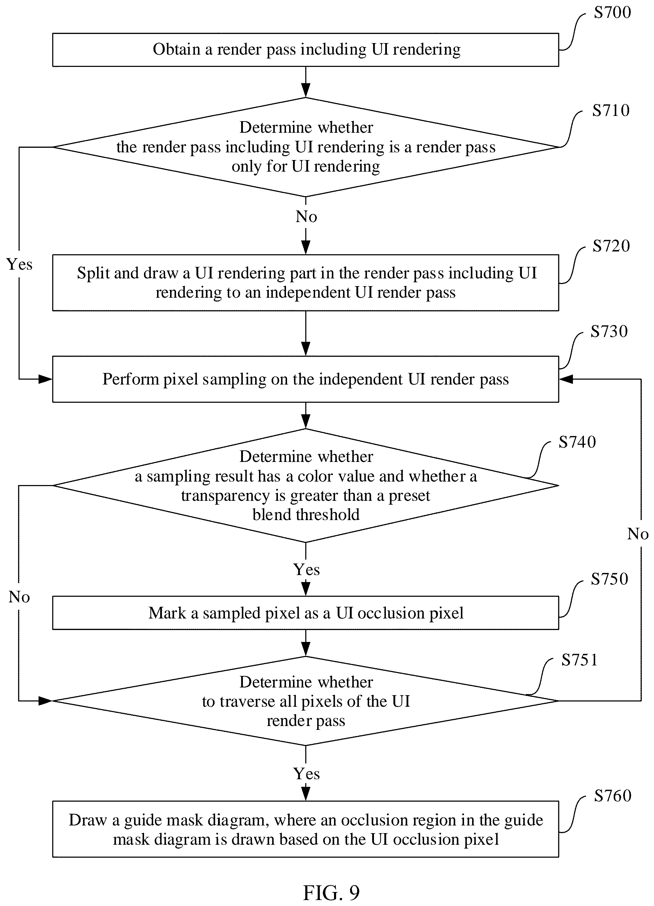

FIG. 9 is a flowchart of drawing a guide mask diagram according to an embodiment of this application.

S700: Obtain a render pass including UI rendering.

S710: Determine whether the render pass including UI rendering is a render pass only for UI rendering.

If the render pass including UI rendering is not a render pass only for UI rendering, S720 is performed.

S720: Split and draw a UI rendering part in the render pass including UI rendering to an independent UI render pass.

S730: Perform pixel sampling on the independent UI render pass.

If the render pass including UI rendering is not a render pass only for UI rendering, S730 is performed.

S740: Determine whether a sampling result has a color value and whether a transparency is greater than a preset blend threshold.

If a determining result is no, S751 is performed.

If a determining result is yes, S750 is performed.

S750: Mark a sampled pixel as a UI occlusion pixel.

S751: Determine whether to traverse all pixels of the UI render pass.

If all pixels of the UI render pass are not traversed, S730 is performed.

If all pixels of the UI render pass are traversed, S760 is performed.

S760: Draw a guide mask diagram, where an occlusion region (UI occlusion region) in the guide mask diagram is drawn based on a marking result (the UI occlusion pixel) in S750.

A game application scenario is used as an example. As shown in FIG. 4, the game toolkit widget 401, the role status widget 402, and the skill button widgets 403, 404, and 405 on the screen 400 of the mobile phone occludes a 3D game scene picture below.

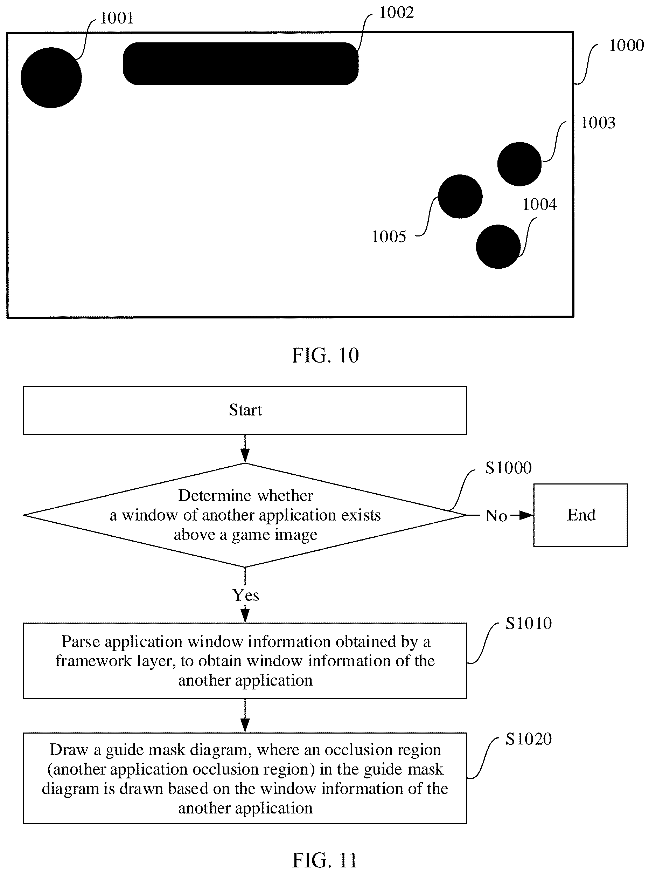

FIG. 10 is a guide mask diagram according to an embodiment of this application.

Based on the positions of the game toolkit widget 401, the role status widget 402, the skill button widgets 403, 404, and 405 on the screen 400 of the mobile phone shown in FIG. 4, a guide mask diagram 1000 shown in FIG. 10 may be finally drawn. In the guide mask diagram 1000, regions 1001, 1002, 1003, 1004, and 1005 in black are occlusion regions (UI occlusion regions).

### 3. Another application occlusion region

When the first application is running in the foreground, another application may also be running. The another application may be an application running in the background or an application that is running in the foreground and that is displayed on split screens with the first application. For example, the first application runs in the foreground, an application other than the first application includes at least a second application, and the second application and the first application are not a same application. The second application may run in the background, or the second application runs in the foreground and is displayed on split screens with the first application.

The application other than the first application may be displayed in a pop-up window above the display interface of the first application running in the foreground, or displayed in a floating window above the display interface of the first application running in the foreground.

When the another application is displayed in a pop-up window or a floating window above the display interface of the first application, content, of the first application, occluded by the pop-up window or the floating window is invisible. During rendering, a region occluded by the pop-up window or the floating window is shaded at a low rate, which does not deteriorate perceivable output image quality.

For example, when a video application plays a video, if a chat application running in the background receives a new chat message, the chat message is displayed in a pop-up window above a video image, and a part of the video image is occluded.

For another example, when a game application is running, the user may run a game assistant in the background to improve game experience, and the game assistant provides a shortcut operation bar for the game. The shortcut operation bar is displayed above a main game scene in a floating window, and occludes a part of the main game scene.

Therefore, in an embodiment, the another application occlusion region includes a window region of a foreground active window of the application (including at least the second application) other than the first application, or a part of the window region of the foreground active window of the application (including at least the second application) other than the first application.

In an embodiment, in S310, when a current frame is rendered, window information of the foreground active window of the application other than the first application (the another application includes at least the second application, and the second application and the first application running in the foreground are not a same application) is obtained by a system framework layer at an end of a previous frame or at a start stage of the current frame. The foreground active window includes a fixed window, a floating window, and a pop-up window that are displayed on the screen in a window manner.

The window information of the foreground active window is parsed, to obtain information about the foreground active window, for example, a size, a shape, and center coordinates. The window region of the foreground active window of the another application is drawn, and the window region of the foreground active window of the another application is marked as the another application occlusion region.

Alternatively, in another embodiment, after the window region of the foreground active window of the another application is obtained, it is determined whether the window region overlaps the display interface of the first application. If the window region overlaps the display interface of the first application, an overlapping region is marked as the another application occlusion region.

In some embodiments, when the first application running in the foreground is displayed in full screen (only one application is run in the foreground), and an application other than the first application (for example, the application other than the first application includes the second application, and the second application is run in the background) has a foreground active window, and all regions of the foreground active window overlap the display interface of the first application. In this case, the window region of the foreground active window of the application other than the first application is marked as the another application occlusion region.

When a plurality of applications are running in the foreground (for example, the first application and one or more other applications are displayed on split screens), and an application other than the first application has a foreground active window, an overlapping region between the foreground active window and the display interface of the first application is determined based on a position/size of the foreground active window. The overlapping region between the foreground active window of the application other than the first application and the display interface of the first application is marked as the another application occlusion region.

A game application scenario is used as an example. The first application is a game application, and the first application is displayed in full screen.

FIG. 11 is a flowchart of drawing a guide mask diagram according to an embodiment of this application.

S1000: A system framework layer determines whether a window of another application currently exists above a game image (whether a foreground active window of another application exists).

If the window of the another application does not exist, the procedure ends.

If the window of the another application exists, S1010 is performed.

S1010: Parse application window information obtained by the framework layer, to obtain window information of the foreground active window of the another application.

The window information of the foreground active window of the another application includes information such as a quantity of windows and window coordinates, a window shape, and a window size of each window.

S1020: Draw a guide mask diagram, where an occlusion region (another application occlusion region) in the guide mask diagram is drawn based on the window information of the another application.

As shown in FIG. 4, the game assist widget 406 on the screen 400 of the mobile phone is an application interface of a game assistant application other than a game application. The game assist widget 406 occludes a 3D game scene image below.

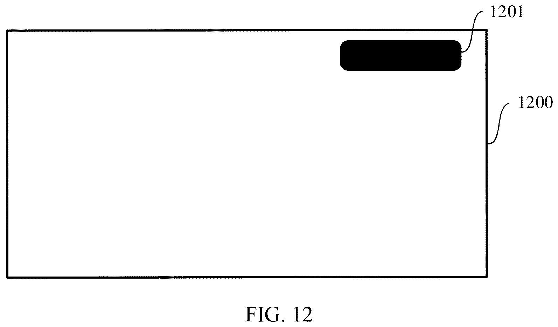

FIG. 12 is a guide mask diagram according to an embodiment of this application.

Based on the position of the game assist widget 406 on the screen 400 of the mobile phone shown in FIG. 4, a guide mask diagram 1200 shown in FIG. 12 may be drawn. In the guide mask diagram 1200, a region 1201 in black is an occlusion region (the another application occlusion region).

### 4. Device component self-occlusion region

A front-facing camera is usually configured on a mobile phone. Usually, the front-facing camera is installed on a display of the mobile phone.

For example, some displays have notch regions. For another example, some displays have punch hole regions. For example, one or more front-facing cameras may be correspondingly disposed in the notch region or the punch hole region. Due to existence of the front-facing camera, a region corresponding to the front-facing camera cannot display an image.

During rendering, low rate shading is performed on a part (corresponding to display content of a rectangular vertex/notch region/punch hole region) that cannot be displayed in the rectangular display image of the application, and perceptible output image quality is not deteriorated.

Therefore, in an embodiment, the device component self-occlusion region includes a region that corresponds to the front-facing camera and that is of the display of the electronic device.

In some embodiments, the device component self-occlusion region may include a region of an in-screen camera, and the region corresponding to the in-screen camera may display an image. It should be understood that the region corresponding to the in-screen camera is usually close to an edge of the screen. Therefore, the method in embodiments of this application is also applicable.

Usually, to ensure universality of display content, a display picture of the application is of a rectangle shape. However, shapes of some displays are not a rectangle in strict sense.

For example, some displays are of a rounded rectangle shape. The top corner of the rectangular display picture cannot be displayed on the screen. During rendering, low rate shading is performed on a part (corresponding to display content of a rectangular vertex/notch region/punch hole region) that cannot be displayed in the rectangular display image of the application, and perceptible output image quality is not deteriorated.

For another example, some displays (curved screens) have curved-surface display regions. Due to a limitation of a field of view, the user does not carefully distinguish display content of the curved-surface display regions. During rendering, low rate shading is performed on the display content of the curved-surface display region in the rectangular display picture of the application, and perceptible output image quality is not deteriorated.

Therefore, in an embodiment, the device component self-occlusion region further includes a missing part (a rectangular vertex missing in the rounded corner part), of the display, compared with the rectangular display picture, and a curved surface display part.

In conclusion, in an embodiment, the device component self-occlusion region includes a part that is of a rectangular display picture and that is occluded by the device component. In other words, the device component self-occlusion region includes a missing part (an abnormal display region), in a normal display region of a display, compared with the rectangular display picture. The abnormal display region may be a combination of one or more of a region corresponding to the front-facing camera, a rectangular vertex missing in the rounded corner region of the display, and a curved-surface display region of the display.

In some embodiments, the device component self-occlusion region is drawn based on occlusion of the current device component to the rectangular display picture (based on comparison between a shape of the normal display region of the display and the rectangular display picture).

For example, a device component self-occlusion image is pre-generated based on occlusion to the rectangular display picture when the current device component displays the application in full screen. The device component self-occlusion image includes an interface pattern, and a size and a shape of the interface pattern are consistent with those of the rectangular display picture. In the interface pattern, based on blocks in different colors, a part (the abnormal display region) that is occluded by the current device component on the rectangular display picture is marked.

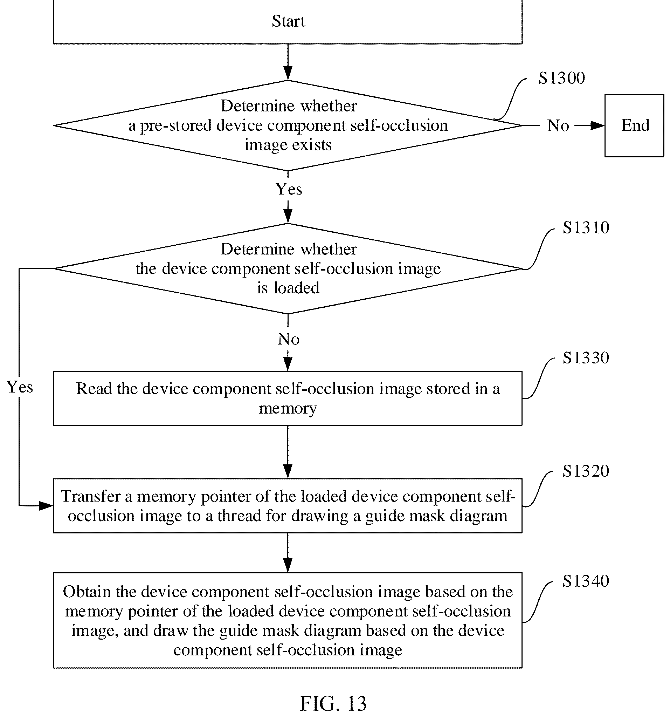

FIG. 13 is a flowchart of drawing a guide mask diagram according to an embodiment of this application.

S1300: Determine whether a pre-stored device component self-occlusion image exists.

If the pre-stored device component self-occlusion image does not exist, the procedure ends.

If the pre-stored device component self-occlusion image exists, S1310 is performed.

In some embodiments, in an initialization stage of VRS, execution of S1300 is triggered.

In some other embodiments, in a device startup stage, execution of S1300 is triggered.

S1310: Determine whether the device component self-occlusion image is loaded.

If the device component self-occlusion image is loaded, S1320 is performed.

S1320: Transfer a memory pointer of the loaded device component self-occlusion image to a thread for drawing a guide mask diagram.

If the device component self-occlusion image is not loaded, S1330 is performed.

S1330: Read the device component self-occlusion image stored in a memory.

S1320 is performed after S1330.

S1340: Obtain the device component self-occlusion image based on the memory pointer of the loaded device component self-occlusion image, and draw the guide mask diagram based on the device component self-occlusion image.

In an embodiment, in S1340, the device component self-occlusion image is used as the guide mask diagram. In the guide mask diagram, the occlusion region (the device component self-occlusion region) is an abnormal display region of the display.

Alternatively, in another embodiment, in S1340, it is determined whether the abnormal display region in the device component self-occlusion image overlaps the display interface of the first application. If the abnormal display region in the device component self-occlusion image overlaps the display interface, the guide mask diagram is generated based on the device component self-occlusion image. In the guide mask diagram, a region that is in the abnormal display region and that overlaps the display interface of the first application is marked as an occlusion region (the device component self-occlusion region).

For example, when the first application is displayed in full screen, all abnormal display regions occlude the display interface of the first application, and all the abnormal display regions are marked as device component self-occlusion regions. When the first application and another application are displayed in split screens, the region that is in the abnormal display region and that overlaps the display interface of the first application may occlude the display interface of the first application, and the region that is in the abnormal display region and that overlaps the display interface of the first application is marked as the device component self-occlusion region.

A game application scenario is used as an example. As shown in FIG. 4, the screen 400 is a curved display with a notch, 409 is the notch part, and the curved surface part of the screen is above a dashed line 407 and below a dashed line 408.

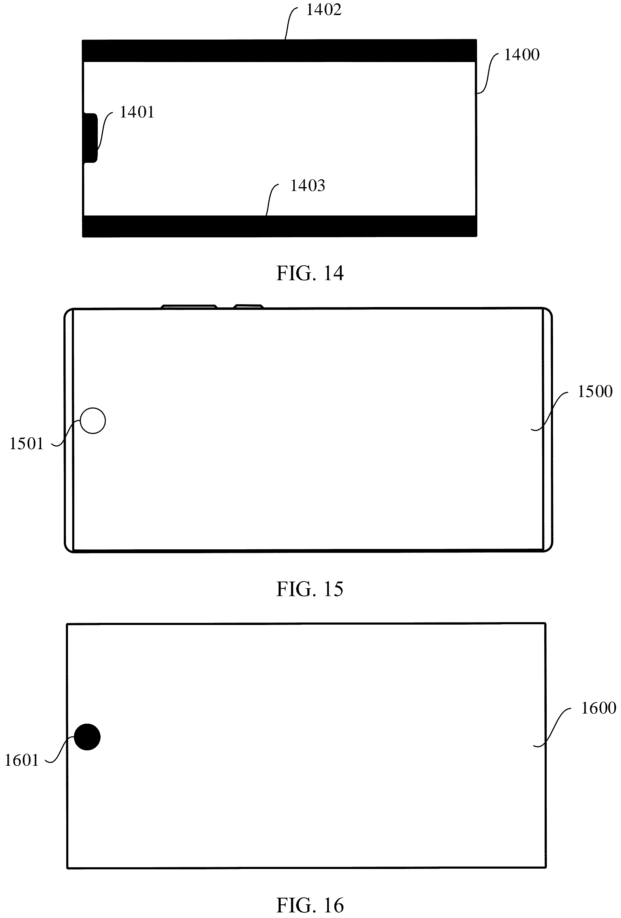

FIG. 14 is a guide mask diagram according to an embodiment of this application.

Based on the positions of the notch part 409 and the curved surface part on the screen 400 of the mobile phone shown in FIG. 4, a guide mask diagram 1400 shown in FIG. 14 may be drawn. In the guide mask diagram 1400, regions 1401, 1402, and 1403 in black are occlusion regions (device component self-occlusion regions).

FIG. 15 is a diagram of a display of a mobile phone according to an embodiment of this application.

As shown in FIG. 15, a screen 1500 is a punch hole screen, and 1501 is a punch hole part.

FIG. 16 is a guide mask diagram according to an embodiment of this application.

Based on the position of the punch hole part 1501 on the screen 1500 of the mobile phone shown in FIG. 15, a guide mask diagram 1600 shown in FIG. 16 may be drawn. In the guide mask diagram 1600, a region 1601 in black is an occlusion region (the device component self-occlusion region).

In S310, when occlusion regions are identified based on a plurality of occlusion region types, after a corresponding occlusion region is determined for each occlusion region type, all the occlusion regions are fused into occlusion regions in the guide mask diagram.

For example, the occlusion regions (the hand occlusion region) 610 and 620 shown in FIG. 8, the occlusion regions (the UI occlusion region) 1001, 1002, 1003, 1004, and 1005 shown in FIG. 10, the occlusion region (the another application occlusion region) 1201 shown in FIG. 12, and the occlusion region (the device component self-occlusion region) 1401 shown in FIG. 14 are fused into the occlusion regions in the guide mask diagram shown in FIG. 5, or fused into the guide mask diagram shown in FIG. 4.

In S310, the occlusion region may alternatively be identified in another manner.

A game application scenario is used as an example. In a process of drawing a main game scene, there is an occlusion relationship between different models in the main game scene.

In an embodiment, in S310, a render pass texture of the main scene is obtained, the texture is divided into 16*16 chunks, all pixels in each chunk are read, RGB values of the pixels are converted into luminance values, and average luminance is calculated and used as a reference threshold. A frequency reference value is obtained from a frequency domain information calculation module, a motion rate reference value is obtained from a motion rate calculation module, and the two values are multiplied, to obtain a final estimated reference value. The estimated reference value is compared with the reference threshold, and a chunk lower than the reference threshold is marked as an occlusion region (a chunk higher than the reference threshold is marked as high rate shading, and a slice lower than the reference threshold is marked as low rate shading), to generate a guide mask diagram.

According to the method in embodiments of this application, the occlusion region is determined from a plurality of perspectives, to widen an effective range of the occlusion region, improve stability of a gain of variable rate shading, and cover more scenarios.

S320: Render the to-be-displayed image based on variable rate shading, to generate a display image of the first application, where the occlusion region is rendered based on at least a first shading rate, the non-occlusion region is rendered based on at least a second shading rate, and the first shading rate is less than the second shading rate.

In S320, for the rendering instruction stream and the association data that are obtained in S300, variable rate shading is applied based on the guide mask diagram drawn in S310, to generate the display image of the first application.

S320 includes:
using the guide mask diagram as a mask of the to-be-displayed image, and performing corresponding shape and position matching between the occlusion regions in the guide mask diagram and the to-be-displayed image; and
performing image rendering on the to-be-displayed image based on the guide mask diagram, where the occlusion region is rendered based on at least a first shading rate, the non-occlusion region is rendered based on at least a second shading rate, and the first shading rate is less than the second shading rate, that is, for the to-be-displayed image, an image region corresponding to the occlusion region in the guide mask diagram is shaded at a low rate.

In an implementation of S320, the occlusion regions are shaded at a unified rate.

In an embodiment, the shading rate is described by a matrix. A shading rate a*b means that one pixel in a*b pixels in a columns and b rows is reserved for rendering and shading.

For example, in an embodiment, a shading rate 4*4 is used for the occlusion region, that is, for every 4*4 pixels corresponding to the occlusion region, 15 pixels are culled, and one pixel is reserved for rendering and shading. After rendering and shading end, the previously culled pixel is supplemented with the pixel reserved before sampling.

For example, a ratio of the guide mask diagram to the to-be-rendered image is set to 1:64. One pixel in the guide mask diagram corresponds to 8x8 pixels of the to-be-rendered image (one mask pixel guides shading of 8*8 pixels) based on a shape and position matching relationship between the guide mask diagram and the to-be-rendered image. For example, the to-be-rendered image includes 8m*8n pixels. The guide mask diagram includes m*n mask pixels.

A pixel shading list is generated based on the guide mask diagram. The pixel shading list includes data bits whose quantity is the same as a quantity of pixels of the to-be-rendered image. For example, the to-be-rendered image includes 8m*8n pixels. The pixel shading list includes 8m*8n data bits.

The data bits in the pixel shading list one-to-one correspond to the pixels of the to-be-rendered image. A correspondence between the mask pixels of the guide mask diagram and the data bits in the pixel shading list is set according to a correspondence between the mask pixels of the guide mask diagram and the pixels of the to-be-rendered image. One mask pixel of the guide mask diagram guides values of 8*8 data bits in the pixel shading list.

A value of each data bit in the pixel shading list may be 0 or 1. When one mask pixel belongs to a non-occlusion region in the guide mask diagram, a shading rate of 8*8 pixels of the to-be-rendered image that correspond to the mask pixel is set to 4*4. In other words, when one mask pixel belongs to the non-occlusion region in the guide mask diagram, values of 8*8 data bits in the pixel shading list that correspond to the mask pixel are configured as that values of 15 data bits in every 16 data bits are set to 0, and a value of 1 data bit is set to 1.

In a shading process, shading is performed based on values of the pixel shading list. A pixel corresponding to a data bit whose value is 0 in the pixel shading list is culled, and a pixel corresponding to a data bit whose value is 1 in the pixel shading list is shaded.

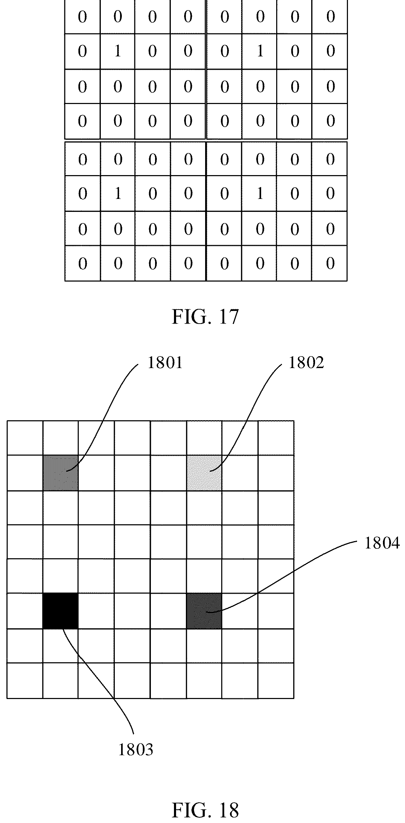

FIG. 17 is a diagram of values of 8*8 data bits in a pixel shading list at a shading rate of 4*4.

As shown in FIG. 17, values of 15 data bits in every 16 data bits are set to 0, and a value of 1 data bit is set to 1.

FIG. 18 is a diagram of a shading result of 8*8 pixels at a shading rate of 4*4.

As shown in FIG. 18, only pixels 1801, 1802, 1803, and 1804 are shaded, and other pixels are not shaded.

After rendering and shading are completed, the previously culled pixel is supplemented with the pixel reserved before sampling. In other words, a shading result of the shaded pixel is supplemented to a pixel that is not shaded.

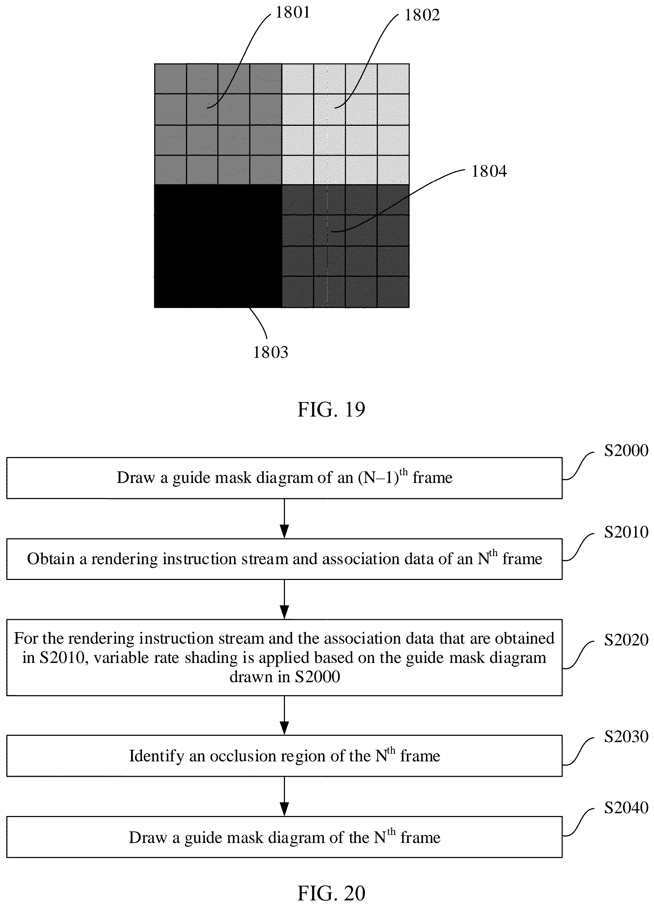

FIG. 19 is a diagram of a result of shading supplement performed based on the shading result in FIG. 18.

As shown in FIG. 19, shading results of the pixels 1801, 1802, 1803, and 1804 are supplemented to pixels that are not shaded around the shaded pixels.

A game application scenario is used as an example. A depth value of a main scene corresponding to a low shading rate region is set to 0.0f. When the main game scene is drawn, shading overheads of 15/16 (93.75%) pixels in an occlusion region is culled based on an early-z feature, and a pixel that is not shaded is restored by sampling interpolation of an adjacent point.

In some embodiments, for image rendering, a graphics system is configured with a depth buffer (depth buffer). The depth buffer (depth buffer) is used to store a depth (depth) or distance value of each pixel in a window from an observation plane (a near clip plane). The depth buffer (depth buffer) may be implemented by using hardware. For example, a fixed storage space in a hardware memory is specified as the depth buffer. Alternatively, the depth buffer (depth buffer) may be implemented by using software. For example, during rendering, a storage address space is dynamically specified as the depth buffer.

Because the depth buffer (depth buffer) may store depth values of all pixels of the to-be-rendered image, the depth value is replaced with data bits in the pixel shading list, and the pixel shading list may be directly stored in the depth buffer (depth buffer) without reconfiguring a data structure.

Therefore, in an embodiment, the pixel shading list is implemented based on the depth buffer (depth buffer). For example, depth buffer data is generated based on the guide mask diagram, and the depth buffer data is stored in the depth buffer (depth buffer).

One mask pixel of the guide mask diagram guides depth values of 8*8 pixels in the depth buffer data. When one mask pixel belongs to a non-occlusion region in the guide mask diagram, the depth values of 8*8 pixels in the depth buffer data that correspond to the mask pixel are configured as that 15 depth values in every 16 depth values are set to 0, and one depth value is set to 1 (0 indicates a smallest depth, and 1 indicates a largest depth).

In a shading process, shading is performed based on the depth buffer data. Pixels corresponding to the depth value 0 in the deep buffer data are culled, and pixels whose depth value is 1 in the deep buffer data is shaded.

In another implementation of S320, the occlusion regions are not shaded at a unified rate. Instead, the occlusion regions are divided into a plurality of sub-regions, and different sub-regions are shaded at different rates.

For example, in an embodiment, the occlusion regions are divided into a plurality of sub-regions based on different types of the occlusion regions. For example, the hand occlusion region, the user interface occlusion region, the another application occlusion region, and the device component self-occlusion region respectively correspond to four sub-regions. For another example, the hand occlusion region and the device component self-occlusion region correspond to one sub-region, and the user interface occlusion region and the another application occlusion region correspond to one sub-region.

In some embodiments, in the guide mask diagram, different sub-regions in the occlusion regions are marked by pixel values of mask pixels, and different pixel values correspond to different sub-regions. A corresponding shading rate is used based on the pixel value of the mask pixel in the guide mask diagram.

In some embodiments, it is specified that different mask pixel values correspond to different shading rates. For details, refer to Table 1.

**Table 1**

| Number | Mask pixel value | Shading rate |
|---|---|---|
| 1 | 0 | 1*1 |
| 2 | 1 | 1*2 |
| 3 | 2 | 1*4 |
| 4 | 3 | 1*8 |
| 5 | 4 | 2*1 |
| 6 | 5 | 2*2 |
| 7 | 6 | 2*4 |
| 8 | 7 | 2*8 |
| 9 | 8 | 4*1 |
| 10 | 9 | 4*2 |
| 11 | 10 | 4*4 |
| 12 | 11 | 4*8 |
| 13 | 12 | 8*1 |
| 14 | 13 | 8*2 |
| 15 | 14 | 8*4 |
| 16 | 15 | 8*8 |

It is specified that one pixel in the guide mask diagram corresponds to 8*8 pixels of the display (one mask pixel guides shading of 8*8 pixels). When the guide mask diagram is drawn, a corresponding pixel value is set for each mask pixel of the guide mask diagram based on shading rate allocation. For example, for mask pixels of the non-occlusion region, a mask pixel value is set to 0 (a shading rate is 1*1, and normal shading, instead of low rate shading, is performed). For mask pixels of the hand occlusion region, a mask pixel value is set to 9 (a shading rate is 4*2). For mask pixels of the UI occlusion region and the another application occlusion region, a mask pixel value is set to 10 (a shading rate is 4*4). For mask pixels of the device component self-occlusion region, a mask pixel value is set to 16 (a shading rate is 8*8).

The depth buffer (depth buffer) data is generated based on the guide mask diagram, and one mask pixel guides depth values of 8*8 pixels in the depth buffer data. When the mask pixel value is 0, the depth values of the 8*8 pixels in the corresponding depth buffer are all 1. When the mask pixel value is 9, in the 8*8 pixels in the corresponding depth buffer, depth values of 7 pixels in every 4*2 pixels are set to 0, and a depth value of one pixel is set to 1 (a shading rate is 4*2).

According to the method in embodiments of this application, the occlusion region of the application is identified and VRS is performed, to reduce computing amounts for rendering without deteriorating user experience. This improves rendering performance and reduces display power consumption. According to the method in embodiments of this application, because the occlusion region has a larger effective range and is less likely to be perceived by the user, VRS has a stable gain, and covers a plurality of scenarios.

In an embodiment, frame-based variable rate shading is used.

FIG. 20 is a flowchart of implementing VRS according to an embodiment of this application.

S2000: Draw a guide mask diagram of an (N-1)^{th} frame.

S2010: Obtain a rendering instruction stream and association data of an N^{th} frame.

S2020: For the rendering instruction stream and the association data that are obtained in S2010, variable rate shading is applied based on the guide mask diagram drawn in S2000.

S2030: Identify an occlusion region of the N^{th} frame.

S2040: Draw a guide mask diagram of the N^{th} frame.

In an embodiment, VRS is implemented based on software, so that VRS can be applied on different hardware platforms.

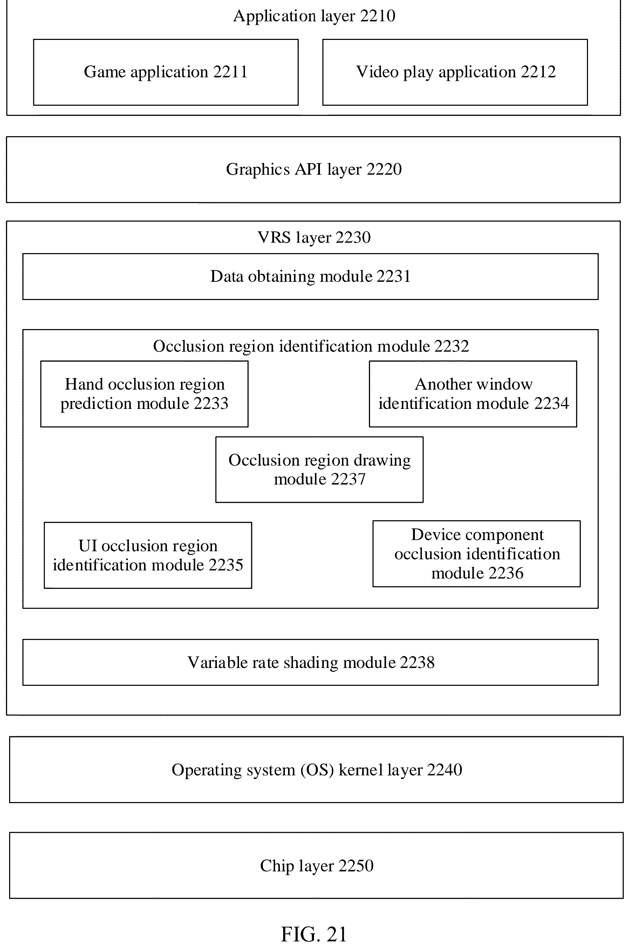

FIG. 21 is a diagram of a system architecture according to an embodiment of this application.

As shown in FIG. 21, an application layer 2210 is configured to run applications (for example, a game application 2211 and a video play application 2212).

A graphics API layer 2220 is configured to load a graphics driver. The graphics driver is a driver that can draw a graphics, for example, OpenGL and Vulkan.

An operating system (OS) kernel layer 2240 is configured to load a system kernel and a driver.

A chip layer 2250 is a hardware layer of an electronic device, and includes a CPU and a GPU.

A VRS layer 2230 is configured to implement a procedure of the VRS method in embodiments of this application. The VRS layer 2230 is included in an instruction reassembly layer in a terminal OS system, and includes a data obtaining module 2231, an occlusion region identification module 2232, and a variable rate shading module 2238.

The data obtaining module 2231 is configured to hook a graphics API call from the graphics API layer 2220, hook a graphics instruction data stream, capture computing and rendering-related data, for example, information such as a main scene render pass and a UI render pass of a current frame, from the graphics API call, and cache the related data. The data obtaining module 2231 hooks all driver instructions through a reserved interface of the graphics driver before an engine layer calls driver layer instructions, and buffers the driver instructions into an instruction stream. Some driver instructions include the main scene render pass information and the UI render pass information during drawing.

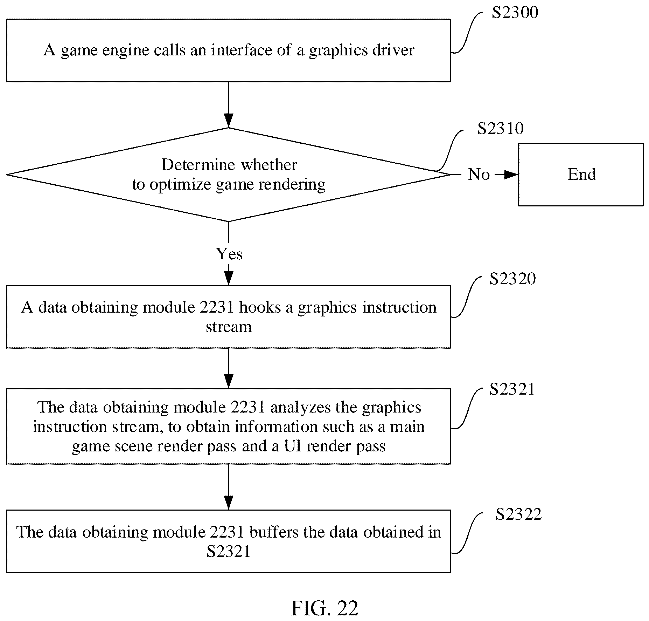

A game application scenario is used as an example. FIG. 22 is a schematic flowchart of running a data obtaining module 2231 according to an embodiment of this application.

S2300: A game engine calls the interface of the graphics driver.

S2310: The data obtaining module 2231 determines whether game rendering needs to be optimized.

If game rendering does not need to be optimized, the procedure ends.

If game rendering needs to be optimized, S2320 is performed.

S2320: The data obtaining module 2231 hooks the graphics instruction stream.

S2321: The data obtaining module 2231 analyzes the graphics instruction stream, to obtain the information such as the main game scene render pass and the UI render pass.

S2322: The data obtaining module 2231 buffers the data obtained in S2321.

The occlusion region identification module 2232 performs identification at a tail of a frame, parses a touch event and information about a window of another application that are received in the current frame, and calculates a hand occlusion region and an occlusion region of the window of the another application; parses a UI render pass, and calculates a UI occlusion region; load a device component occlusion region; and finally draws a guide mask diagram (which regions are shaded at a low rate).

The occlusion region identification module 2232 includes a hand occlusion region prediction module 2233, another window identification module 2234, a UI occlusion region identification module 2235, a device component occlusion identification module 2236, and an occlusion region drawing module 2237.

The variable rate shading module 2238 is configured to determine, based on the guide mask diagram, which regions are shaded at which rate when a main scene of a next frame is drawn, reassemble a hooked instruction stream, and transmit the instruction stream to a system kernel and a driver (the operating system (OS) kernel layer 2240).

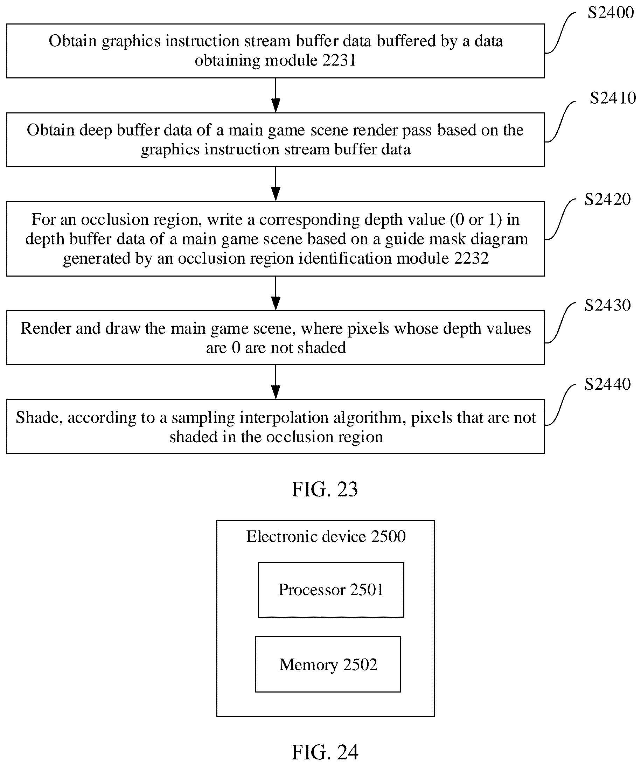

A game application scenario is used as an example. FIG. 23 is a schematic flowchart of running a variable rate shading module 2238 according to an embodiment of this application.

S2400: Obtain graphics instruction stream buffer data buffered by the data obtaining module 2231.

S2410: Obtain deep buffer data of a main game scene render pass based on the graphics instruction stream buffer data.

S2420: For an occlusion region, write a corresponding depth value (0 or 1) in depth buffer data of a main game scene based on the guide mask diagram generated by the occlusion region identification module 2232.

For example, one mask pixel controls a shading rate of a region with 8*8 pixels in a depth buffer. When a mask pixel value is 10, the shading rate of the region with 8*8 pixels corresponding to the depth buffer should be 4*4. It indicates that only one of the 16 pixels is reserved for shading, a depth value of the shaded pixel is set to 1, and depth values of the other 15 pixels that need to be culled from shading are set to 0 (0 indicates a smallest depth, and 1 indicates a largest depth).

S2430: Render and draw the main game scene, where pixels whose depth values are 0 are not shaded by using an early-z mechanism, which reduces FS execution overheads.

S2440: After rendering of the main scene is completed, pixels that are not shaded in the occlusion region are shaded based on the guide mask diagram generated by the occlusion region drawing module and a sampling interpolation algorithm.

According to the method in this embodiment of this application, VRS is implemented at the instruction reassembly layer in the terminal OS system, an application at the application layer does not need to be adapted, and implementation of VRS does not depend on the application. Therefore, it is ensured that the VRS method in this embodiment of this application can be applied to any platform and any application. This improves applicability and universality of VRS.

In the descriptions of embodiments of this application, for ease of description, the apparatus is described by dividing functions into various modules. Division into the modules is merely logical function division. During implementation of embodiments of this application, the functions of the modules may be implemented in a same piece of or a plurality of pieces of software and/or hardware.

During actual implementation, all or some of the apparatuses provided in embodiments of this application may be integrated into one physical entity, or may be physically separated. In addition, the modules may be all implemented in a form of software invoking processing elements; or the modules may be all implemented in a form of hardware; or some modules may be implemented in a form of software invoking processing elements, and some modules may be implemented in a form of hardware. For example, a detection module may be an independently disposed processing element, or may be integrated in one chip of an electronic device for implementation. Implementations of other modules are similar. In addition, all or some of the modules may be integrated, or may be implemented independently. In an implementation process, steps in the foregoing method or the foregoing modules can be implemented by using a hardware integrated logical circuit in the processing element, or by using instructions in a form of software.

For example, the foregoing modules may be configured as one or more integrated circuits for implementing the foregoing method, for example, one or more application-specific integrated circuits (Application-Specific Integrated Circuit, ASIC), one or more digital signal processors (Digital Signal Processor, DSP), or one or more field programmable gate arrays (Field Programmable Gate Array, FPGA). For another example, these modules may be integrated together and implemented in a form of a system-on-a-chip (System-On-a-Chip, SOC) apparatus.

An embodiment of this application further provides an electronic device.

FIG. 24 is a diagram of a structure of an electronic device according to an embodiment of this application.

As shown in FIG. 24, an electronic device 2500 includes a memory 2502 configured to store computer program instructions and a processor 2501 configured to execute the program instructions. When the computer program instructions are executed by the processor 2501, the electronic device 2500 is triggered to perform the method steps described in embodiments of this application.

Specifically, in an embodiment of this application, one or more computer programs are stored in the memory 2502, the one or more computer programs include instructions, and when the instructions are executed by the electronic device 2500, the electronic device 2500 is enabled to perform the method steps in embodiments of this application.

It may be understood that descriptions of the structure of the electronic device 2500 in this embodiment of this application does not constitute a specific limitation on the electronic device 2500. In some other embodiments of this application, the electronic device 2500 may include a component other than the processor 2501 and the memory 2502.

The processor 2501 may be a system-on-a-chip SOC apparatus. The processor 2501 may include a central processing unit (Central Processing Unit, CPU), and may further include a processor of another type.

The processor 2501 may include, for example, a CPU, a DSP, a microcontroller, or a digital signal processor, and may further include a GPU, an embedded neural-network processing unit (Neural-network Processing Unit, NPU), and an image signal processor (Image Signal Processor, ISP). The processor may further include a necessary hardware accelerator or a logic processing hardware circuit, for example, an ASIC, or one or more integrated circuits configured to control program execution of the technical solutions in this application. In addition, the processor may have a function of operating one or more software programs. The software program may be stored in a storage medium.

The processor 2501 may include one or more processing units. For example, the processor may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors. In some embodiments, the electronic device 2500 may alternatively include one or more processors 2501. The controller may generate an operation control signal based on instruction operation code and a time sequence signal, to complete control of instruction fetching and instruction execution.

In some embodiments, the processor 2501 may include one or more interfaces. The interface may include an inter-integrated circuit (inter-integrated circuit, I2C) interface, an inter-integrated circuit sound (integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a SIM card interface, a USB interface, and/or the like. The USB interface is an interface that conforms to a USB standard specification, and may be specifically a mini USB interface, a micro USB interface, a USB type-C interface, or the like. The USB interface may be configured to connect to a charger to charge the electronic device, or may be used for data transmission between the electronic device and a peripheral device.

The electronic device 2500 may further include an interface for external memory. The interface for external memory may be configured to connect to an external memory card, for example, a micro SD card, to extend a storage capability of the electronic device. The external memory card communicates with the processor 2501 through the interface for external memory, to implement a data storage function. For example, files such as music and videos are stored in the external memory card.

The memory 2502 may include a code storage area and a data storage area. The code storage area may store an operating system. The data storage area may store data created in a process of using the electronic device 2500, and the like. In addition, the memory 2502 may include a high-speed random access memory, or may include a non-volatile memory, for example, one or more magnetic disk storage components, a flash memory component, or a universal flash storage (universal flash storage, UFS).

The memory 2502 may be a read-only memory (read-only memory, ROM) or another type of static storage device that can store static information and instructions, a random access memory (random access memory, RAM) or another type of dynamic storage device that can store information and instructions, an electrically erasable programmable read-only memory (electrically erasable programmable read-only memory, EEPROM), a compact disc read-only memory (compact disc read-only memory, CD-ROM) or another optical disk storage, an optical disc storage (including a compact disc, a laser disc, an optical disc, a digital versatile disc, a Blu-ray disc, or the like), a disk storage medium or another magnetic storage device, or any other medium that can be used to carry or store expected program code in a form of instructions or a data structure and that can be accessed by a computer.

The processor 2501 and the memory 2502 may be combined into one processing apparatus, but are more commonly components independent of each other.

The device, apparatus, or module described in embodiments of this application may be specifically implemented by a computer chip or an entity, or may be implemented by a product having a function.

A person skilled in the art should understand that embodiments of this application may be provided as a method, an apparatus, or a computer program product. Therefore, the present invention may use a form of hardware only embodiments, software only embodiments, or embodiments with a combination of software and hardware. Moreover, the present invention may use a form of a computer program product that is implemented on one or more computer-usable storage media that include computer-usable program code.

In several embodiments provided in this application, when any function is implemented in a form of software functional unit and sold or used as an independent product, the function may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for indicating a computer device (which may be a personal computer, a server, or a network device) to perform all or a part of the steps of the method described in embodiments of this application.

An embodiment of this application further provides a computer-readable storage medium. The computer-readable storage medium stores a computer program, and when the computer program is run on a computer, the computer is enabled to perform the method provided in embodiments of this application.

An embodiment of this application further provides a computer program product. The computer program product includes a computer program, and when the computer program is run on a computer, the computer is enabled to perform the method provided in embodiments of this application.

Embodiments of this application are described with reference to the flowcharts and/or block diagrams of the method, the device (apparatus), and the computer program product according to embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It should be noted that in embodiments of this application, the term "at least one" means one or more, the term "a plurality of" means two or more. "And/or" describes an association relationship for describing associated objects and represents that three relationships may exist. For example, A and/or B may represent the following three cases: Only A exists, both A and B exist, and only B exists. A and B may be singular or plural. The character "/" generally indicates an "or" relationship between the associated objects. "At least one of the following" and similar expressions refer to any combination of these terms, including any combination of single or plural terms. For example, at least one of a, b, or c may indicate a, b, c, a and b, a and c, b and c, or a, b, and c, where a, b, and c may be singular or plural.

In embodiments of this application, the term "include", "have", or any other variant thereof is intended to cover a non-exclusive inclusion, so that a process, a method, a commodity, or a device that includes a series of elements not only includes those elements but also includes other elements that are not expressly listed, or further includes elements inherent to such a process, method, commodity, or device. An element preceded by "includes a ..." does not, without more constraints, preclude an existence of additional identical elements in the process, method, commodity, or device that includes the element.

This application can be described in the general context of executable computer instructions executed by a computer, for example, a program module. Generally, the program module includes a routine, program, object, component, data structure, and the like for executing a particular task or implementing a particular abstract data type. This application may be practiced in distributed computing environments in which tasks are performed by remote processing devices that are connected through a communication network. In a distributed computing environment, program modules may be located in both local and remote computer storage media including storage devices.

Embodiments in this application are described in a progressive manner, the same and similar parts between various embodiments can be referred to each other, and each embodiment focuses on differences from other embodiments Especially, an apparatus embodiment is basically similar to a method embodiment, and therefore is described briefly; for related parts, refer to partial descriptions in the method embodiment.

A person of ordinary skill in the art may be aware that units and algorithm steps described in embodiments of this application may be implemented by electronic hardware, or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing apparatus and unit, reference may be made to a corresponding process in the foregoing method embodiments, and details are not described herein again.

The foregoing descriptions are merely specific implementations of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An image rendering method based on variable rate shading, applied to an electronic device, wherein the method comprises:
determining an occlusion region and a non-occlusion region in a to-be-displayed image of a first application, wherein the occlusion region is an occluded region in the to-be-displayed image, and the non-occlusion region is a region that is not occluded in the to-be-displayed image; and
rendering the to-be-displayed image based on variable rate shading, to generate a display image of the first application, wherein the occlusion region is rendered based on at least a first shading rate, the non-occlusion region is rendered based on at least a second shading rate, and the first shading rate is less than the second shading rate.

2. The method according to claim 1, wherein the occlusion region comprises any one or any combination of a hand occlusion region, a user interface occlusion region, another application occlusion region, and a device component self-occlusion region;
the hand occlusion region comprises a hand coverage region on a display or a part of the hand coverage region that is determined in response to a touch operation of a user;
the user interface occlusion region comprises a region, in an image region of a user interface of the first application, that occludes application display content of the first application;
the another application occlusion region comprises a window region of a foreground active window of a second application, or a part of the window region of the foreground active window of the second application; and
the device component self-occlusion region comprises a region that corresponds to a front-facing camera and that is of the display of the electronic device.

3. The method according to claim 2, wherein
determining the occlusion region and the non-occlusion region in the to-be-displayed image of the first application comprises:
in response to a touch event of the user, parsing the touch event, to obtain touch region information;
determining the hand coverage region based on the touch region information; and
marking the hand coverage region as the hand occlusion region, or marking, as the hand occlusion region, a region that is in the hand coverage region and that overlaps a display interface of the first application.

4. The method according to claim 2, wherein determining the occlusion region and the non-occlusion region in the to-be-displayed image of the first application comprises:
determining the image region of the user interface based on a display image of a previous frame; and
when the image region of the user interface occludes the application content of the first application, marking an image region that causes occlusion in the image region of the user interface as the user interface occlusion region.

5. The method according to claim 4, wherein determining the occlusion region and the non-occlusion region in the to-be-displayed image of the first application comprises:
identifying a user interface render pass of a previous frame;
performing sampling on the user interface render pass, to obtain a sampling pixel; and
when the sampling pixel has a color value and transparency is greater than a preset threshold, marking an image region corresponding to the sampling pixel as the user interface occlusion region.

6. The method according to claim 2, wherein determining the occlusion region and the non-occlusion region in the to-be-displayed image of the first application comprises:
obtaining window information of the foreground active window of the second application;
drawing the window region of the foreground active window based on the window information of the foreground active window of the second application; and
marking the window region of the foreground active window as the another application occlusion region, or marking, as the another application occlusion region, a region that is in the window region of the foreground active window and that overlaps a display interface of the first application.

7. The method according to claim 2, wherein determining the occlusion region and the non-occlusion region in the to-be-displayed image of the first application comprises:
comparing a shape of a normal display region of the display with a rectangular display picture, and drawing an abnormal display region of the display based on a comparison result; and
marking the abnormal display region as the device component self-occlusion region, or marking, as the device component self-occlusion region, a region that is in the abnormal display region and that overlaps a display interface of the first application.

8. The method according to any one of claims 1 to 7, wherein the occlusion region comprises at least a first region; and
rendering the to-be-displayed image based on variable rate shading, to generate the display image of the first application comprises:
selecting a first pixel region from the first region based on the first shading rate, wherein the first region comprises the first pixel region and a second pixel region; and
shading pixels in the first pixel region, and performing shading result filling on the second pixel region based on a shading result of the first pixel region.

9. The method according to claim 8, wherein the occlusion region further comprises at least a second region; and
rendering the to-be-displayed image based on variable rate shading, to generate the display image of the first application further comprises:
shading the second region at a third shading rate, wherein the third shading rate is different from the first shading rate, and the third shading rate is less than the second shading rate.

10. The method according to claim 9, wherein the second region and the first region respectively correspond to different occlusion region types.

11. The method according to any one of claims 1 to 10, wherein the method comprises:
determining an occlusion region and a non-occlusion region in an (N-1)^{th} frame of display image of the first application;
obtaining a rendering instruction stream and association data in an N^{th} frame of to-be-displayed image of the first application;
performing display image rendering based on the rendering instruction stream and the association data of the N^{th} frame of to-be-displayed image of the first application, to generate an N^{th} frame of display image of the first application, wherein the variable rate shading is applied based on the occlusion region and the non-occlusion region in the (N-1)^{th} frame of the to-be-displayed image of the first application; and
determining an occlusion region and a non-occlusion region in the N^{th} frame of display image of the first application.

12. An electronic device, wherein the electronic device comprises a memory configured to store computer program instructions and a processor configured to execute the computer program instructions, and when the computer program instructions are executed by the processor, the electronic device is triggered to perform steps of the method according to any one of claims 1 to 11.

13. A computer-readable storage medium, wherein the computer-readable storage medium stores a computer program, and when the computer program is run on a computer, the computer is enabled to perform the method according to any one of claims 1 to 11.
